(19)

Europäisches
Patentamt
European
Patent Office
Office européen
des brevets

(11) **EP 1 772 973 A1**

(12) **EUROPEAN PATENT APPLICATION**

(43) Date of publication:
**11.04.2007 Bulletin 2007/15**

(51) Int Cl.:
***H04B 7/04*** (2006.01)

(21) Application number: **06121807.9**

(22) Date of filing: **05.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.10.2005 KR 20050094642**

(71) Applicant: **Samsung Electronics Co., Ltd.
Suwon-si, Gyeonggi-Do (KR)**

(72) Inventors:
• **Hwang, In-Seok
   Seoul (KR)**

• **Yang, Jang-Hoon
   Bundang-gu
   Sungnam-si
   Gyeonggi-do (KR)**
• **Jeong, Joong-Ho
   63-34,
   Seocho-gu
   Seoul (KR)**
• **Yoon, Soon-Young
   Songpa-gu
   Seoul (KR)**

(74) Representative: **Grünecker, Kinkeldey,
Stockmair & Schwanhäusser
Anwaltssozietät
Maximilianstrasse 58
80538 München (DE)**

(54) **Transmitter and transmitting method in multiple transmitting antenna communication system**

(57)     A transmitter and a transmitting method for forming a pseudo common beam using a plurality of antennas in a smart antenna communication system are provided, in which beams for tones of Orthogonal Frequency Division Multiplexing (OFDM) signals transmitted through a plurality of antennas are rotated at different phases around a frequency axis, such that a combined beam of the transmitted beams is equivalent to a pseudo common beam. Accordingly, a peak to average power ratio (PAPR) of the preamble signal is prevented from changing.

FIG.2

**Description**

## CROSS-REFERENCE TO RELATED PATENT APPLICATION

This application claims the benefit under 35 U.S.C. § 119(a) of a Korean Patent Application filed in the Korean Intellectual Property Office on October 8, 2006 and assigned Serial No. 2005-94642, the entire disclosure of which is hereby incorporated by reference.

## BACKGROUND OF THE INVENTION

Field of the Invention:

The present invention relates generally to a transmitter and a transmitting method for forming a pseudo common beam using a plurality of antennas in a smart antenna communication system. More particularly, the present invention relates to multiple transmitting antenna communication systems, including a smart antenna communication system, in which beams for tones (sub-carriers) of Orthogonal Frequency Division Multiplexing (OFDM) signals transmitted through a plurality of antennas are rotated at different phases around a frequency axis, such that a combined beam of the transmitted beams is equivalent to a pseudo common beam. Accordingly, peak to average power ratio (PAPR) of a preamble signal is prevented from changing..

Description of the Related Art:

In a smart antenna communication system, a downlink frame consists of a common beam period of transmitting common information and an adaptive beam period of transmitting data to a specific user. There are two methods for forming the common beam.

A first method for forming the common beam is to transmit a signal only using a specific antenna in the common beam period. In this case, only a power amplifier connected to the specific antenna is used in the common beam period. That is, a transmission power of the specific antenna is transmitted in the same way as a single antenna base station. When an average output power of the single antenna base station is 20 watts, a smart antenna base station (transmitter) using four antennas transmits the common information through the specific antenna at the output power of 20 watts. Therefore, in the case of the system in which the transmitter has the average output power of 20 watts, the power amplifier connected to the corresponding antenna must have the capacity of 20 watts. In the adaptive beam period, data are transmitted to the respective users at the average output power of 5 watts. If the common information is transmitted through the specific antenna at the output power of 20 watts, instead of forming the common beam by combining a plurality of antennas, the power amplifier connected to the corresponding antenna must be designed to have the average capacity of 20 watts.

A second method for forming the common beam is to measure beam patterns of respective antennas and combine the beam patterns. In this case, four antennas are used and power amplifiers connected to the respective antennas have an average capacity of 5 watts.

In a conventional implementation, it will be assumed that the base station (transmitter) has linearly arranged antennas, each antenna has a beam pattern of $A(f_k)$ at an $f_k$-th sub-carrier, and an antenna interval is $d=d_1=d_2=d_3$. On the assumption that the phase of the antenna pattern is zero, a phase according to a fine length variation of power cables for each antenna is modeled as a random phase. For example, when the center frequency of the system is 2.35 GHz, its wavelength is 12.5 cm and the length of the power cable is about 20 m. Thus, if the length variation of the power cable is not within $12.5 \times 10^{-2}/20 = 0.625\%$, the path for each antenna has a random phase of $\varphi_{m,0}$ When the beam factor for each antenna at the $f_k$-th sub-carrier for the combination of the common beam is $w_{m,k}$, the combined beam pattern $S(f_k)$ is expressed as Equation (1):

$$S(f_k;\theta) = A(f_k;\theta) + \sum_{m=1}^{3} w_{m,k} \cdot A(f_k;\theta)e^{j2m\pi\frac{d}{\lambda}sin(\theta)} \cdot e^{j\varphi_m}, \ \varphi_m = \varphi_{m,0} \sim U(0,2\pi)$$

$$\ldots\ldots(1)$$

where $f_k$ is a sub-carrier index, $k$ and $m$ in $w_{m,k}$ are a sub-carrier index and an antenna index, respectively, $\theta$ is a signal transmission direction from the base station, $d$ is an interval of the antennas, $A(f_k;\theta)$ is an antenna element

characteristic value, $\varphi_m = \varphi_{m,0} \sim U(0,2\pi)$ is an antenna phase shift value in the antenna installation, and $U$ represents uniform.

To make the combined beam pattern most similar to the desired common beam $S_0(\theta)$, the optimization expressed as Equation (2) must be solved:

$$\min_{\{w_{m,k}\}} \oint_\theta \left| S_0(\theta) - \sqrt{\frac{1}{N_{used}} \sum_k |S(f_k;\theta)|^2} \right|^2 d\theta \qquad \ldots \ldots (2)$$

where $N_{used}$ is the number of tones (sub-carriers) used.

$$S(\theta)_{rms} = \sqrt{(1/N_{used}) \sum_k |S(f_k;\theta)|^2} \ldots \ldots (3)$$

where rms represents a root mean square.

In Equation (3), $S(\theta)_{rms}$ represents an average radiation pattern (scalar value) in $\theta$ direction at a diversity sub-channel through which the common information of the system is transmitted. When the number of sub-carriers constructing the diversity sub-channel is sufficiently large and the common information is transmitted using the plurality of sub-channels, an average reception strength $S(\theta)_{rms}$ at all sub-carriers used in the whole symbols can represent a performance of the common beam pattern.

As can be seen from the above Equations, in order to combine the common beam, the beam patterns $A(f_k)$ for each antenna element and the phase shift $\varphi_{m,0}$ caused by the power cable in the antenna installation must be measured in each antenna, and the optimization problem of Equation (2) must be solved using the measured pattern. Therefore, it is difficult to implement the combined common beam in the installation of the general base station. In addition, if the beam factor ($w_{m,k}$) for each antenna changes, the phase between the sub-carriers of the downlink preamble also changes. Consequently, the characteristic of the peak to average power ratio (PAPR) of the preamble signal may be degraded.

Therefore, in the smart antenna communication system, such as a multiple antenna Orthogonal Frequency Division Multiple Access (OFDMA) system, there is a demand for an apparatus and method for forming a pseudo common beam using a plurality of antennas in transmitting the common information, such as MAP information and operation message.

Accordingly, there is a need for an improved apparatus and method for preventing the PAPR of a preamble signal from changing, while a combined beam in each tone of OFDM signals by using a plurality of antennas is made similar to a common beam.

## SUMMARY OF THE INVENTION

An aspect of exemplary embodiments of the present invention is to address at least the above problems and/or disadvantages and to provide at least the advantages below. Accordingly, an aspect of exemplary embodiments of the present invention is to provide a transmitter and a transmitting method of a smart antenna communication system, in which a pseudo common beam is formed by combining beams for each tone using a plurality of antennas, and common information is transmitted through the plurality of antennas.

According to one aspect of exemplary embodiments of the present invention, a transmitter and a transmitting method of a smart antenna communication system, includes beams for tones transmitted through a plurality of antennas are rotated at different phases around a frequency axis, thereby preventing PAPR of a preamble signal from changing.

According to another aspect of exemplary embodiments of the present invention, a transmitter of a multiple transmitting antenna communication system includes a beam factor generator for generating beam factors for each tone of a transmit (TX) signal such that beams rotate at different phases around a frequency axis, and transmitting the phase-rotated beams through a plurality of antennas.

According to another aspect of exemplary embodiments of the present invention, a transmitter of a multiple transmitting antenna communication system includes a channel encoder for encoding a transmit (TX) signal, a beam factor generator for generating beam factors for each tone of the encoded signal such that beams rotate at different phases around a frequency axis, and a plurality of antennas for transmitting the differently phase-rotated beams comprising the beam factors, such that a synthesized beam of respective beams becomes a pseudo common beam.

According to a further aspect of exemplary embodiments of the present invention, a transmitting method of a multiple transmitting antenna communication system includes beam factors generated to make tones of a TX signal rotate at different phases around a frequency axis, and the beams for each tone transmitted, to which the beam factors are applied, through a plurality of antennas.

According to further aspect of exemplary embodiments of the present invention, a transmitting method of a multiple transmitting antenna communication system includes a TX signal is channel-encoded, beam factors are generated to make tones of the encoded TX signal rotate at different phases around a frequency axis, the differently phase-rotated beams comprising the beam factors are transmitted through a plurality of antennas, and the transmitted beams are combined into a pseudo common beam.

According to further aspect of exemplary embodiments of the present invention, a transmitting method of a multiple antenna communication system includes a determination as to whether a TX signal period is a common beam period, if the TX signal period is the common beam period, a beam factor of $w_{m,k} = e^{-j2\pi f_k \tau/N_{FFT}}$ is applied for each tone of the TX signal, where $f_k$ is a sub-carrier index, m is an antenna index, $\tau_m$ is a cyclic delay offset of an m-th antenna in time axis, and $N_{FFT}$ represents a magnitude of FFT, and the tones are transmitted, to which the beam factors are applied, through a plurality of antennas, such that a combined beam of the beams for each tone becomes a pseudo common beam.

## BRIEF DESCRIPTION OF THE DRAWINGS

The above and other objects, features and advantages of certain exemplary embodiments of the present invention will be more apparent from the following detailed description taken in conjunction with the accompanying drawings, in which:

FIG. 1A is a diagram of a downlink frame structure in a multiple antenna communication system according to an exemplary embodiment of the present invention;

FIG. 1B is a diagram of a diversity sub-channel having sub-carriers selected in an entire frequency band according to an exemplary embodiment of the present invention;

FIG. 2 is a block diagram of a transmitter in the multiple antenna communication system according to an exemplary embodiment of the present invention;

FIG. 3 is a diagram of a common beam and an adaptive beam in the multiple antenna communication system according to an exemplary embodiment of the present invention;

FIG. 4 is a diagram of an antenna array in the multiple antenna communication system according to an exemplary embodiment of the present invention;

FIG. 5 is a flowchart illustrating an operation of a beam factor generator in the multiple antenna communication system according to an exemplary embodiment of the present invention;

FIG. 6 is a graph illustrating a principle of forming a pseudo common beam in the multiple antenna communication system according to an exemplary embodiment of the present invention; and

FIG. 7 is a graph illustrating a pseudo common beam formation in the multiple antenna communication system according to an exemplary embodiment of the present invention.

Throughout the drawings, the same drawing reference numerals will be understood to refer to the same elements, features and structures.

## DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention is applied to a multiple transmitting antenna communication system.

In the following description, Time Division Duplexing (TDD) OFDMA base station (transmitter) using a smart antenna technology defined in Institute of Electrical and Electronics Engineers (IEEE) 802.16e standard will be taken as an example. In the transmitter, common information such as MAP information and operation message is made similar to a combined beam formed by applying different phase rotation coefficients in a frequency axis according to each tone (sub-carrier) of OFDM signal by using a plurality of antennas. In this case, it is possible to prevent PAPR of a preamble signal from changing.

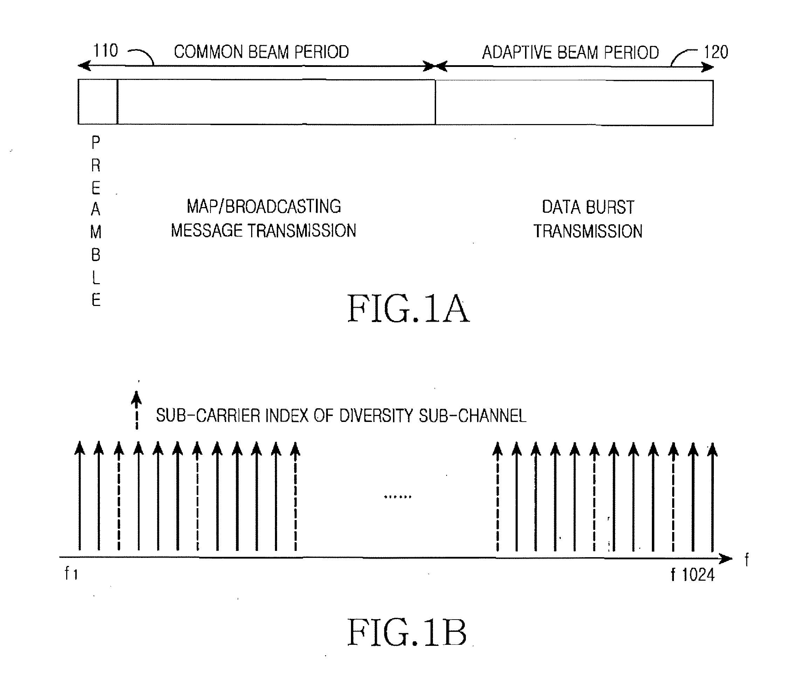

FIG. 1A is a diagram of a downlink frame structure in a smart antenna communication system according to an exemplary embodiment of the present invention. The frame includes a common beam period 110 of transmitting common information such as MAP information and an operation message, and an adaptive beam period 120 of transmitting data to a specific receiver (user). The two periods have orthogonality. The OFDMA system secures the orthogonality of the two periods by using different orthogonal symbol periods. As another example, a Code Division Multiple Access (CDMA) system secures the orthogonality by allocating different codes.

FIG. 1B is a diagram of a diversity sub-channel constructed with sub-carriers selected in an entire frequency band according to the present invention. In the OFDMA system such as IEEE 802.16e system, the common beam period uses the diversity sub-channel constructed with the sub-carriers selected in the entire frequency band in order to obtain the frequency diversity illustrated in FIG. 1(b). Solid-line arrows represent candidate sub-carriers.

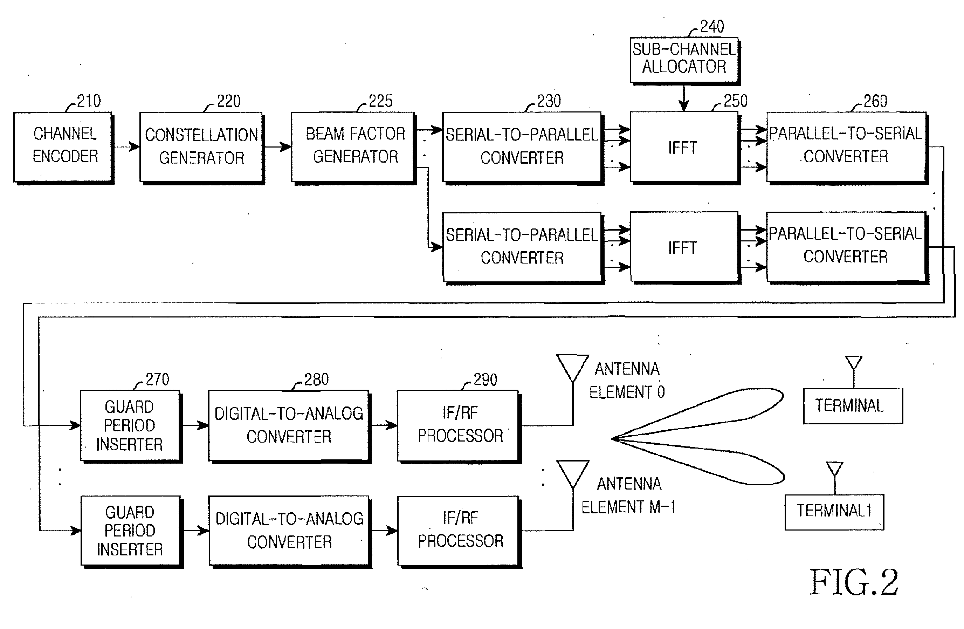

FIG. 2 is a block diagram of a transmitter in the smart antenna communication system according to an exemplary embodiment of the present invention. The OFDMA system such as IEEE 802.16e system will be taken as an example. A transmit (TX) signal is encoded by a channel encoder 210. In a beam factor generator 225, tones (sub-carriers) passing through a constellation generator 220 form beams according to locations of a receiver (terminal) by using different beam factors that are to be multiplied to antennas according to the sub-carriers. The beam factor generator 225 generates beam factors for different phase rotations around a frequency axis according to respective tones of the TX signal. Then, the beams pass through serial-to-parallel converters 230 and inverse fast Fourier transformer (IFFT) blocks 250. The number of serial-to-parallel converters 230 and the IFFT blocks 250 are provided equivalent to the number of antennas. A sub-channel allocator 240 allocates the sub-channels to the IFFT blocks 250. The symbols from the IFFT blocks 250 pass through parallel-to-serial converters 260, guard period inserters 270, digital-to-analog converters 280, and IF/RF processors 290 and then are transmitted through the antennas.

Unlike the single antenna system, the transmitter of the OFDMA smart antenna communication system requires a number of IFFT blocks 250 and the IF/RF processors 290 equivalent to the antennas. In such a transmitter, data are transmitted through the antennas by using different beam factors in each sub-carrier, so that the beams are formed according to the locations of the terminal.

The present invention focuses on the beam factor generator 225 among the entire structure of the transmitter. More specifically, the present invention provides a method for forming the beam factor that is to be multiplied with respect to the sub-carrier the OFDM signal according to the antenna in the common beam period of FIG. 1.

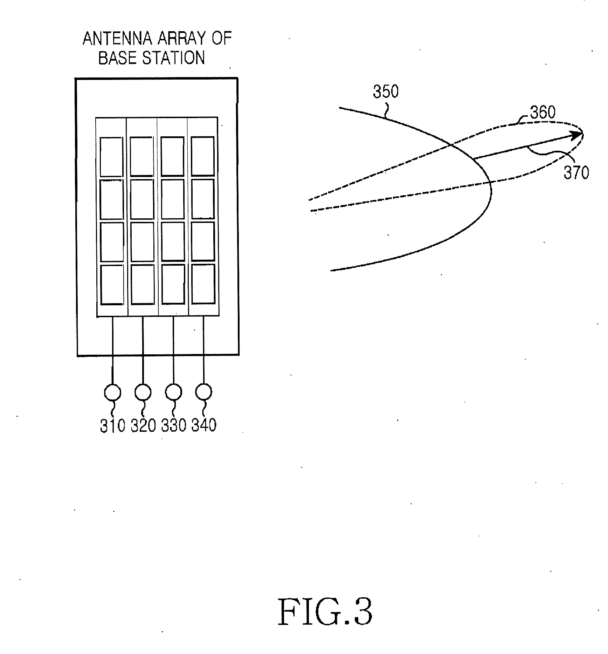

FIG. 3 is a diagram of a common beam 350 and an adaptive beam 360 in the smart antenna communication system according to an exemplary embodiment of the present invention. In the common beam period, the common information that all receivers (terminals, users) must receive is transmitted. Thus, the common beam 350 is transmitted in all directions, not a specific direction. On the other hand, the adaptive beam period is a signal period where data is transmitted to a specific receiver (terminal, user). Thus, as indicated by a reference numeral 360 in FIG. 3, transmission energy is transmitted in a specific direction, so that a beamforming gain indicated by a reference numeral 370 can be obtained.

According to an exemplary embodiment of the present invention, the common information is not transmitted through a specific antenna, but the common beam is formed by combining a plurality of antennas. Table 1 shows average powers in the common beam period and the adaptive beam period according to the related art and an exemplary embodiment of the present invention.

Table 1: Assumed that the common beam output is 20 watts and four TX antennas 310, 320, 330 and 340 are used.

|  | Average output power for antenna | |
|---|---|---|
|  | Common beam period | Adaptive beam period |
| The related art | 20 or 0 watts | 5 watts |
| The present invention | 5 watts | 5 watts |

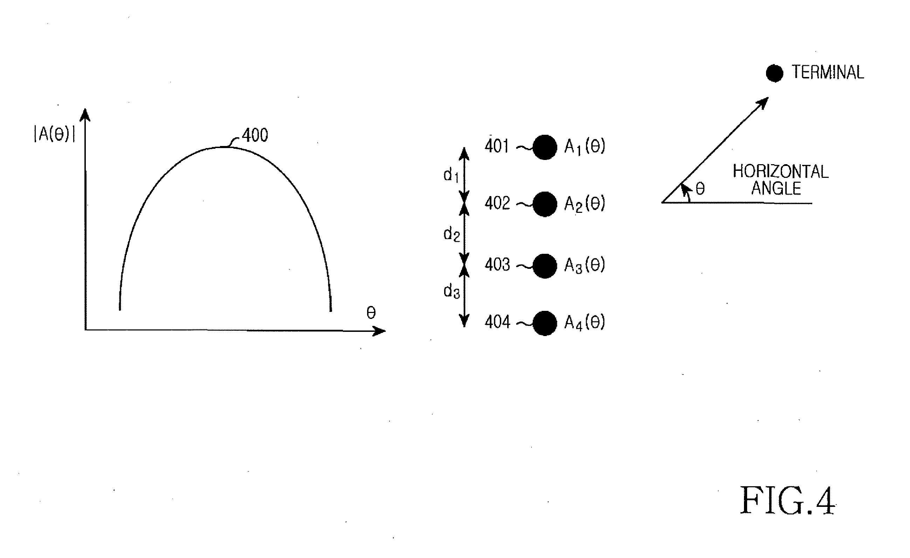

FIG. 4 is a diagram of an antenna array in the smart antenna communication system according to an exemplary embodiment of the present invention. In generating the beam factors for each tone of the TX signal, the beams are made to rotate at different phases around the frequency axis and are transmitted through a plurality of antennas 401, 402, 403 and 404 separated by distances $d_1$, $d_2$ and $d_3$, respectively. The phase rotation may be a linear phase rotation. In the linear phase rotation, different cyclic delay offsets ($\tau$) are assigned to the beams of the respective tones, which are transmitted to the respective antenna in time domain. That is, in order to change the phase of each tone transmitted from the respective antennas, the different cyclic delay offsets ($\tau$) are assigned to the OFDM signals transmitted to the respective antennas in time domain according to the antennas. The time-domain cyclic delay offset is equal to equivalently multiplying the linear phase in the frequency axis, that is, rotating in the frequency axis. Unit of $\tau$ is expressed as the number of samples.

For example, assuming that the time-domain sample of the preamble is $a_n$, $a_n$ is a result obtained by IFFT-processing Binary Phase Shift Keying (BPSK) signal sequence $b_k$ mapped into respective sub-carriers of the preamble. The time-domain sample of $b_k \cdot e^{-j2\pi f_k \tau / N_{FFT}}$ given by linearly changing the phase of $b_k$ becomes $a_{n-\tau}$, so that the time-domain PAPR characteristic is not changed. Applying the cyclic delay offset $t_m$ to the m-th antenna is equal to setting $w_{m,k}$ of Equation (1) to $w_{m,k} = e^{-j2\pi f_k \tau / N_{FFT}}$. $N_{FFT}$ represents a magnitude of the implemented FFT.

The combined beam of Equation (1) is expressed as Equation (4).

$$S(f_k;\theta) = A(\theta) + \sum_{m=1}^{3} A(\theta) e^{jm\pi \sin(\theta)} \cdot e^{j\varphi_m(f_k)}, \ \varphi_m(f_k) = \varphi_{m,0} - 2\pi f_k \tau_m / N_{FFT} \ . \ .$$

$$. \ . \ . \ (4)$$

where $S(f_k;\theta)$ is a beam pattern of a $f_k$-th sub-carrier combined by the phase $w_{m,k}$ for each antenna, $f_k$ is a sub-carrier index, m is an antenna index, $\theta$ is signal transmission direction from the base station, $d$ is an interval of the antennas, $A(\theta)$ is an antenna element characteristic value, $\varphi_m(f_k) = \varphi_{m,0} - 2\pi f_k \tau_m / N_{FFT}$ is an antenna phase shift value in the antenna installation, and $N_{FFT}$ represents a magnitude of FFT.

If the beams for each tone are linearly phase rotated in the above-described manner, the time-domain PAPR characteristic of the downlink preamble is not changed in combining the common beam for each tone.

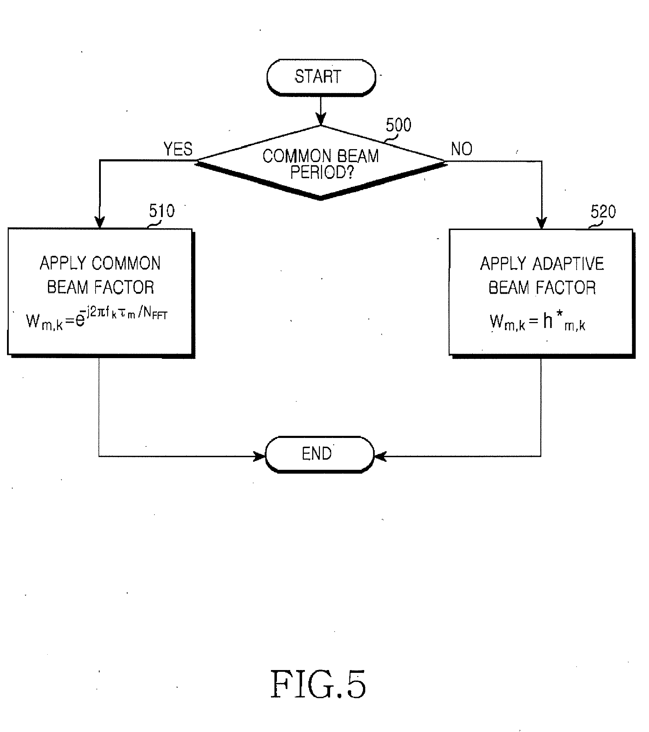

FIG. 5 is a flowchart illustrating an operation of the beam factor generator in the smart antenna communication system according to an exemplary embodiment of the present invention.

Referring to FIG. 5, the beam factor generator 225 of FIG. 2 determines if the OFDM signal period currently transmitted is the common beam period in step 500. When the OFDM signal period is the common beam period, the common beam is formed using the beam factor of $w_{m,k} = e^{-j2\pi fk\tau / NFFT}$ in step 510. On the other hand, when the OFDM signal period is the common beam period, the adaptive beam is formed using an m-th antenna channel matrix $h^*_{m,k}$ estimated at a $f_k$-th sub-carrier in step 520.

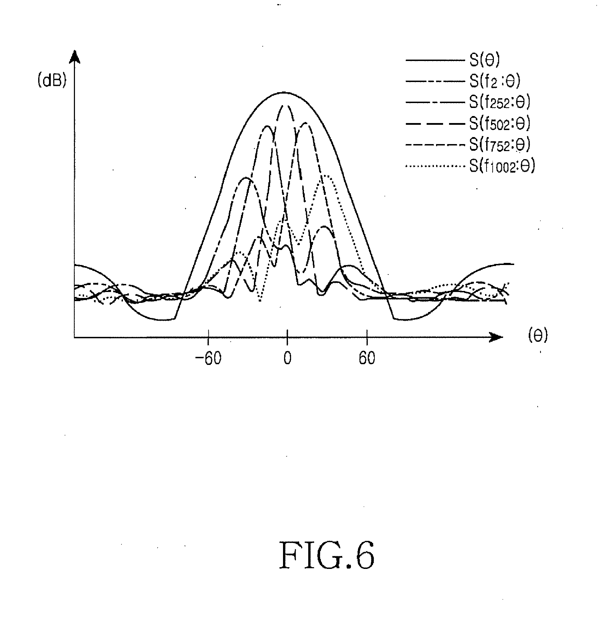

FIG. 6 is a graph illustrating a principle of forming a pseudo common beam in the smart antenna communication system according to an exemplary embodiment of the present invention. For example, FIG. 6 illustrates the operation principle of the pseudo common beam using the diversity sub-channel structure. As can be seen from FIG. 6, directions of the respective sub-carriers are different from one another, and the average $S(\theta)$ of the entire frequencies is similar to the beam patterns $A(\theta)$ of the antennas of FIG. 4, where "*" means a conjugate complex number.

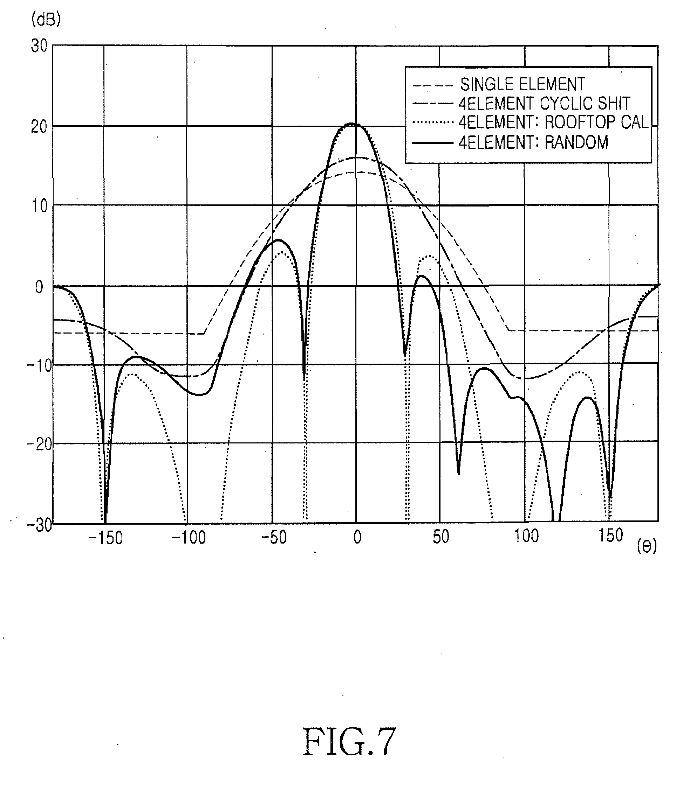

FIG. 7 is a graph illustrating the pseudo common beam forming in the smart antenna communication system according to an exemplary embodiment of the present invention. In FIG. 7, when $d=d_1=d_2=d_3=\lambda/2$, the tone (sub-carrier) is divided a number that is equivalent to the number of antennas, and the cyclic delay offset is set to the divided tones in time domain. A number of samples (unit of $\tau$), $\tau_1$=0.5, $\tau_2$=1.0, and $\tau_3$=2.0, are set to four antennas. The results obtained when the phases are changed according to the respective sub-carriers are illustrated in FIG. 7. It was considered that the phase change in the antennas is caused by the change in the length of the maximum 0.625-cm power line. $N_{FFT}$ was determined on the assumption of a 124 FFT system. For convenience, $N_{used}$ (the number of the tones (sub-carriers) used) was set to 1024. As can be seen from FIG. 7, directions of the respective sub-carriers are different from one another, and the average $S(\theta)$ of the entire frequencies is similar to the beam patterns 400 $A(\theta)$ of the antennas of FIG. 4. In FIG. 7, a dash-dot line represents a common beam transmission scheme using a single element, a cyclic shift represents $S(\theta)$ of the pseudo common beam combined according to an exemplary embodiment of the present invention. A random and a rooftop cal. represent the case in which $w_{m,k}$ of Equation (1) is set to 1 with respect to all m and k. In this case, the beam is formed in a direction of 0°. Thus, there may be a coverage problem in a direction of 30°. The rooftop cal. and the random represent the beam pattern when the phase shift value $\varphi_{m,0}$ caused by a difference of power lines for each antenna is compensated, and the beam pattern when phase shift value $\varphi_{m,0}$ is not compensated, respectively.

According to exemplary embodiments of the present invention, the beams are rotated at different phases around the frequency axis according to the beam factor for each tone of the TX signal, and then are transmitted to a plurality of antennas. The combined beam of the transmitted beams for the tones is made equal to the pseudo common beam. Therefore, compared with the conventional transmission scheme using the single element, the signal of the common beam period can be transmitted at a low power equivalent to the number of antennas. Consequently, it is possible to prevent the PAPR of the preamble signal from changing.

While the invention has been shown and described with reference to certain exemplary embodiments thereof, it will be understood by those skilled in the art that various changes in form and details may be made therein without departing from the spirit and scope of the invention as defined by the appended claims and their equivalents.

**EP 1 772 973 A1**

**Claims**

1. A transmitter of a multiple transmitting antenna communication system, comprising a beam factor generator for generating beam factors for tones of a transmit (TX) signal such that beams rotate at different phases around a frequency axis, wherein the phase-rotated beams are transmitted through a plurality of antennas.

2. The transmitter of claim 1, wherein the phase rotation comprises a linear phase rotation.

3. The transmitter of claim 2, wherein the linear phase rotation comprises assigning different cyclic delay offsets ($\tau$), in time domain, to the beams transmitted to respective antennas.

4. An Orthogonal Frequency Division Multiple Access (OFDMA) system comprising the transmitter as claimed in claim 1.

5. A transmitter of a multiple transmitting antenna communication system, comprising:

   a channel encoder for encoding a transmit (TX) signal;
   a beam factor generator for generating beam factors for tones of the encoded transmit signal such that beams rotate at different phases around a frequency axis; and
   a plurality of antennas for transmitting the differently phase-rotated beams comprising the beam factors, such that a synthesized beam of the respective beams becomes a pseudo common beam.

6. The transmitter of claim 5, wherein the phase rotation comprises a linear phase rotation.

7. The transmitter of claim 6, wherein the linear phase rotation comprises assigning different cyclic delay offsets ($\tau$), in time domain, to the beams transmitted to respective antennas.

8. An Orthogonal Frequency Division Multiple Access (OFDMA) system comprising the transmitter as claimed in claim 5.

9. The transmitter of claim 5, wherein the synthesized beam is expressed as:

$$S(f_k;\theta) = A(\theta) + \sum_{m=1}^{3} A(\theta)e^{jm\pi sin(\theta)} \cdot e^{j\varphi_m(f_k)}, \ \varphi_m(f_k) = \varphi_{m,0} - 2\pi f_k \tau_m / N_{FFT}$$

where $S(f_k;\theta)$ is a beam pattern of an $f_k$-th sub-carrier synthesized by the phase $w_{m,k}$, $f_k$ is a sub-carrier index, m is an antenna index, $\theta$ is signal transmitting direction from the base station, $d$ is an interval of the antennas, $A(\theta)$ is an antenna element characteristic value, $\varphi_m(f_k) = \varphi_{m,0} - 2\pi f_k \tau_m / N_{FFT}$ is an antenna phase shift value when the antenna is installed, and $N_{FFT}$ represents a magnitude of FFT.

10. A transmitting method of a multiple transmitting antenna communication system, the method comprising:

    generating beam factors for rotating tones of a transmit (TX) signal at different phases around a frequency axis; and
    transmitting the beams for each tone, to which the beam factors are applied, through a plurality of antennas.

11. The transmitting method of claim 10, wherein the phase rotation comprises a linear phase rotation.

12. The transmitting method of claim 11, wherein the linear phase rotation comprises assigning different cyclic delay offsets ($\tau$), in time domain, to the beams transmitted to respective antennas.

13. A transmitting method in an Orthogonal Frequency Division Multiple Access (OFDMA) system, the method comprising steps of claim 10.

14. A transmitting method of a multiple transmitting antenna communication system, the method comprising:

    channel-encoding a transmit (TX) signal;

generating beam factors for rotating tones of the encoded transmit (TX) signal at different phases around a frequency axis;

transmitting the differently phase-rotated beams comprising the beam factors through a plurality of antennas; and

combining the transmitted beams into a pseudo common beam.

**15.** The transmitting method of claim 14, wherein the phase rotation comprises a linear phase rotation.

**16.** The transmitting method of claim 15, wherein the linear phase rotation comprises assigning different cyclic delay offsets ($\tau$), in time domain, to the beams transmitted to respective antennas.

**17.** A transmitting method in an Orthogonal Frequency Division Multiple Access (OFDMA) system, the method comprising steps of claim 14.

**18.** A transmitting method of a multiple antenna communication system, the method comprising:

determining if a transmit (TX) signal period is a common beam period;

if the TX signal period is the common beam period, applying a beam factor of $w_{m,k} = e^{-j2\pi f_k \tau/N_{FFT}}$ for each tone of the TX signal, where $f_k$ is a sub-carrier index, m is an antenna index, $\tau_m$ is a cyclic delay offset of a m-th antenna in time axis, and $N_{FFT}$ represents a magnitude of FFT; and

transmitting the tones, to which the beam factors are applied, through a plurality of antennas, such that a combined beam of the beams for each tone becomes a pseudo common beam.

**19.** The transmitting method of claim 18, further comprising forming an adaptive beam using a corresponding antenna channel matrix according to a receiver, when the TX signal period is not the common beam period.

**20.** The transmitting method of claim 18, wherein the transmitting comprises an Orthogonal Frequency Division Multiple Access (OFDMA) system.

**21.** A computer-readable recording medium storing computer program code for a transmitting method of a multiple transmitting antenna communications system where beans for tones, to which beam factors are applied, are transmitted through a plurality of antennas, the code comprising executable instructions for generating beam factors for rotating tones of a transmit (TX) signal at different phases around a frequency axis.

**22.** The transmitting method of claim 21, wherein the phase rotation comprises a linear phase rotation.

**23.** The transmitting method of claim 11, wherein the linear phase rotation comprises assigning different cycle delay offsets($\tau$), in time domain, to the beams transmitted to respective antennas.

**24.** A computer-readable recording medium storing computer program code for a transmitting method of a multiple transmitting antenna communications system where beans for tones, to which beam factors are applied, are transmitted through a plurality of antennas, the code comprising executable instructions for:

channel-encoding a transmit (TX) signal;

generating beam factors for rotating tones of the encoded transmit (TX) signal at different phases around a frequency axis; and

combining the transmitted beams into a pseudo common beam.

**25.** The transmitting method of claim 24, wherein the phase rotation comprises a linear phase rotation.

**26.** The transmitting method of claim 15, wherein the linear phase rotation comprises assigning different cyclic delay offsets ($\tau$), in time domain, to the beams transmitted to respective antennas.

ADAPTIVE BEAM PERIOD
COMMON BEAM PERIOD
120
110

PREAMBLE

MAP/BROADCASTING
MESSAGE TRANSMISSION

DATA BURST
TRANSMISSION

FIG.1A

SUB-CARRIER INDEX OF DIVERSITY SUB-CHANNEL

f 1
f 1024
f

FIG.1B

EP 1 772 973 A1

240
SUB-CHANNEL
ALLOCATOR

210
CHANNEL
ENCODER

220
CONSTELLATION
GENERATOR

225
BEAM FACTOR
GENERATOR

230
SERIAL-TO-PARALLEL
CONVERTER

250
IFFT

260
PARALLEL-TO-SERIAL
CONVERTER

SERIAL-TO-PARALLEL
CONVERTER

IFFT

PARALLEL-TO-SERIAL
CONVERTER

270
GUARD
PERIOD
INSERTER

280
DIGITAL-TO-ANALOG
CONVERTER

290
IF/RF
PROCESSOR

ANTENNA
ELEMENT 0

TERMINAL

GUARD
PERIOD
INSERTER

DIGITAL-TO-ANALOG
CONVERTER

IF/RF
PROCESSOR

ANTENNA
ELEMENT M−1

TERMINAL1

FIG.2

ANTENNA ARRAY OF
BASE STATION

FIG.3

EP 1 772 973 A1

$|A(\theta)|$

400

$\theta$

401 — $A_1(\theta)$

$d_1$

402 — $A_2(\theta)$

$d_2$

403 — $A_3(\theta)$

$d_3$

404 — $A_4(\theta)$

TERMINAL

$\theta$

HORIZONTAL ANGLE

FIG.4

START

500
COMMON BEAM PERIOD?

YES

NO

510
APPLY COMMON BEAM FACTOR

$$W_{m,k} = e^{-j2\pi f_k \tau_m / N_{FFT}}$$

520
APPLY ADAPTIVE BEAM FACTOR

$$W_{m,k} = h^*_{m,k}$$

END

FIG.5

FIG.6

FIG.7

## EUROPEAN SEARCH REPORT

Application Number

EP 06 12 1807

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAMMANN A ET AL: "Beamforming in combination with space-time diversity for broadband OFDM systems" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 April 2002 (2002-04-28), pages 165-171, XP010589479 ISBN: 0-7803-7400-2 * abstract; figures 2,4,5,7 * * page 165 - page 168 * ----- | 1-26 | INV. H04B7/04 |
| X | WO 03/075469 A2 (COGNIO INC [US]; SUGAR GARY L [US]; VAIDYANATHAN CHANDRA [US]) 12 September 2003 (2003-09-12) * abstract; figures 1,8 * * page 3, line 9 - page 6, line 7 * * page 10, line 23 - page 12, line 27 * ----- | 1-26 | |
| X | US 2005/195763 A1 (KADOUS TAMER [US] ET AL) 8 September 2005 (2005-09-08) * figure 8 * * page 8, paragraph 115 - paragraph 125 * ----- | 1-26 | TECHNICAL FIELDS SEARCHED (IPC) H04B H04Q H01Q |
| A | US 6 091 970 A (DEAN STUART JAMES [CA]) 18 July 2000 (2000-07-18) * abstract; figures 1.B,3 * * column 3 - column 7 * ----- | 1-26 | |
| A | EP 1 367 760 A2 (NOKIA CORP [FI]) 3 December 2003 (2003-12-03) * paragraph [0119] - paragraph [0140] * ----- -/-- | 1-26 | |

The present search report has been drawn up for all claims

| Place of search | Date of completion of the search | Examiner |
|---|---|---|
| Munich | 20 February 2007 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 12 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/086708 A1 (TEO KOON HOO [CA] ET AL) 4 July 2002 (2002-07-04)<br>* abstract; figures 5,6B *<br>* paragraph [0003] - paragraph [0005] *<br>* paragraphs [0053], [0054] *<br>* paragraph [0061] - paragraph [0066] *<br>----- | 1-26 | |
| | | | **TECHNICAL FIELDS SEARCHED (IPC)** |

The present search report has been drawn up for all claims

| Place of search | Date of completion of the search | Examiner |
|---|---|---|
| Munich | 20 February 2007 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 1807

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2007

| Patent document cited in search report | | Publication date | Patent family member(s) | | Publication date |
|---|---|---|---|---|---|
| WO 03075469 | A2 | 12-09-2003 | AU | 2003213558 A1 | 16-09-2003 |
| | | | EP | 1543627 A2 | 22-06-2005 |
| | | | TW | 233275 B | 21-05-2005 |
| | | | US | 2004072546 A1 | 15-04-2004 |
| | | | US | 2005215202 A1 | 29-09-2005 |
| US 2005195763 | A1 | 08-09-2005 | AR | 047997 A1 | 15-03-2006 |
| | | | CA | 2558557 A1 | 06-10-2005 |
| | | | EP | 1726136 A1 | 29-11-2006 |
| | | | KR | 20060127249 A | 11-12-2006 |
| | | | WO | 2005094023 A1 | 06-10-2005 |
| US 6091970 | A | 18-07-2000 | NONE | | |
| EP 1367760 | A2 | 03-12-2003 | NONE | | |
| US 2002086708 | A1 | 04-07-2002 | WO | 02054789 A2 | 11-07-2002 |
| | | | CN | 1493166 A | 28-04-2004 |
| | | | EP | 1348310 A2 | 01-10-2003 |
| | | | US | 2006052139 A1 | 09-03-2006 |

EPO FORM P0459

For more details about this annex : see Official Journal of the European Patent Office, No. 12/82

**REFERENCES CITED IN THE DESCRIPTION**

**Patent documents cited in the description**

• KR 200594642